Europäisches Patentamt

European Patent Office

Office européen des brevets

(11) Veröffentlichungsnummer: **0 272 442 B1**

(12) **EUROPÄISCHE PATENTSCHRIFT**

(45) Veröffentlichungstag der Patentschrift: **30.01.91**

(51) Int. Cl.⁵: **F 16 C 33/10, F 16 C 37/00**

(21) Anmeldenummer: **87116848.0**

(22) Anmeldetag: **14.11.87**

(54) **Selbstpumpendes hydrodynamisches Radialgleitlager.**

(30) Priorität: **27.11.86 CH 4746/86**

(43) Veröffentlichungstag der Anmeldung:
**29.06.88 Patentblatt 88/26**

(45) Bekanntmachung des Hinweises auf die
Patenterteilung:
**30.01.91 Patentblatt 91/05**

(84) Benannte Vertragsstaaten:
**AT BE CH DE ES FR GB IT LI NL SE**

(56) Entgegenhaltungen:
**EP-A-0 135 730
DE-A-2 502 805
FR-A-1 354 199
FR-A-1 368 274
US-A-1 460 353**

(73) Patentinhaber: **BBC Brown Boveri AG
Haselstrasse
CH-5401 Baden (CH)**

(72) Erfinder: **Fust, Armin, Dr.
Birchhölzliweg 10
CH-5412 Gebenstorf (CH)**
Erfinder: **Starcevic, Mihailo
Weihermatten 8
CH-5507 Mellingen (CH)**

Courier Press, Leamington Spa, England.

**Beschreibung**

Die vorliegende Erfindung betrifft ein selbstpumpendes hydrodynamisches Radialgleitlager für eine Welle, mit einer durch die hydrodynamische Wirkung von in Spalten zwischen der Wellengleitfläche und dazu parallelen Flächen mindestens eines Pumpsegments induzierten Förderung eines Schmieröles aus einem Oelsumpf, wobei der kleinere Teil des so geförderten Schmieröls zur Bildung eines Schmierölkreises dient und der restliche, grössere Teil des Schmieröles unter Druck in einen Schmierölkreislauf gepumpt oder direkt in den Oelsumpf zurückgefördert wird, wobei ferner die genannten Pumpsegmente, in bekannter Weise je eine Pumptasche, einen Pumpspaltversorgungskanal, durch den das Schmieröl in die Pumptasche gesaugt wird, sowie je einen Sammelkanal, durch den das Schmieröl aus der Pumptasche abfliesst, aufweisen.

Radialgleitlager dieser Bauart eignen sich aufgrund ihres Schmiermechanismus, der sie von einer äusseren Drucköquelle unabhängig macht, besonders für die Lagerung von Wellen mit grosser Vertikalbelastung, bei denen ein Versagen der Druckölzufuhr in kürzester Zeit zur Zerstörung der Lagerlaufflächen und Wellenzapfen führen würde. Der Mechanismus der Schmierwirkung gemäss der vorliegenden Erfindung sorgt während der ganzen Zeit, in der sich die Welle in Drehung befindet, vom Anlauf über den stationären Betriebszustand bis zum Auslauf, für die Bildung eines hydrodynamisch erzeugten Schmierölkeiles zwischen den Gleitflächen. Ein Fressen des Lagers und der Welle, wie es auch bei kurzzeitigem Ausfall einer Druckölversorgung auftreten kann, ist damit praktisch ausgeschlossen.

Stand der Technik

Bekannte Radialgleitlager haben zur Förderung des Schmieröls aus dem Schmierölsumpf an die Stellen, wo sich der Schmierölkeil bilden soll, lose Schmierringe oder mit der Welle fest verbundene oder mit ihr aus einem Stück bestehende Ringe. Sie tauchen in den Schmierölsumpf ein, dessen Niveau zur Vermeidung von Schmierölverlusten unterhalb der Austrittsöffnung für die Welle aus dem Lagergehäuse liegt, und nehmen das Oel nach oben mit, von wo es in die Lagerspalte gelangt.

Der Anwendungsbereich solcher Lagerbauarten beschränkt sich jedoch auf Fälle, bei denen die Erwärmung des Oeles nicht so hoch ist, dass ein Oelkühler erforderlich ist oder allenfalls ein Oelkühler im Sumpf genügt, dessen Kühlwirkung aber im allgemeinen mangelhaft ist. Dies bedeutet, dass die erwähnten Mittel für die Selbstförderung des Schmieröls an die Lagerstellen nur bis zu gewissen Wellendurchmessern und Umfangsgeschwindigkeiten des Wellenzapfens befriedigen, bei denen die Oelerwärmung und die Oelschaumbildung innerhalb zulässiger Grenzen bleibt. Dies trifft im allgemeinen bei Wellendurchmessern unter 600 mm und Zapfenumfangsgeschwindigkeiten bis höchstens 20 m/s zu.

Höher belastete waagrechte Gleitlager würden ohne ausserhalb des Gehäuses vorgesehene Oelkühler unzulässig heiss werden. Ueblicherweise sind solche Lager mit einer Pumpe zum Umwälzen des Schmieröls durch das Lager und den oder die Oelkühler ausgerüstet. Um Lagerhavarien zu vermeiden, müssen diese Elemente, d.h. Pumpe und Kühler, redundant, mindestens also doppelt vorhanden sein. Ein autarker Betrieb solcher hochbelasteter Lager, frei von Fremdenergiequellen, ist also nicht möglich.

Das vorstehend umrissene Problem spielt eine besondere Rolle auch bei axial hochbelasteten Spurzapfengleitlagern, beispielsweise von Wasserkraftgeneratoren. Dort würde ein Heisslaufen des Lagers bei einem Versagen der Schmierölpumpe neben hohen Reparaturkosten den Ausfall der Stromlieferung für längere Zeit und damit auch bedeutende wirtschaftliche Verluste zur Folge haben.

Für solche Axialgleitlager wurde das Problem gelöst durch ein in der CH-Patentschrift 651 362 vorgeschlagenes selbstpumpendes hydrodynamisches Gleitlager, und zwar für das Führungslager eines Spurzapfengleitlagers. Das Führungslager nimmt die auf den Spurzapfen wirkenden waagrechten Kräften auf und setzt sich, wie das Axiallager selbst, aus einzelnen Segmenten zusammen. Die ölfördernden Elemente dieses Führungslagers bestehen aus Ausnehmungen in den Eintrittsbereichen der Segmente, in Richtung der Wellenumfangsgeschwindigkeit gesehen. Diese Ausnehmungen verlaufen über einen Teil ihrer Länge mit konstanter radialer Tiefe und verjüngen sich im letzten Teil in Laufrichtung nach einer Stufe keilförmig, wodurch dort das Oel in den Schmierspalt hineingezogen wird und im restlichen Teil der Laufläche des Lagersegments den hydrodynamischen Schmierfilm bildet. Da durch die Viskosität im anfänglichen, tieferen Teil der Ausnehmung durch die Welle mehr Oel aus dem Oelsumpf mitgerissen wird als zur Schmierfilmbildung benötigt wird und vom Schmierfilmspalt geschluckt werden kann, ist vor der erwähnten Stufe ein quer zur Laufrichtung verlaufender Schmiermittelabflusskanal vorgesehen, durch den der überschüssige Schmiermittelstrom unter Druck, der sich vor der erwähnten keilförmigen Verjüngung aufgebaut hat, in den Oelsumpf zurück abläuft oder aber, wenn grössere Wärmemengen abzuführen sind, durch einen externen Kühler gedrückt und wieder in den Sumpf zurückgefördert wird. Dieser Teil des Schmiermittelstromes stellt die durch die Viskosität umgewälzte Fördermenge dar, der weit geringere Rest wird durch den Schmierfilmspalt gequetscht und verlässt diesen erwärmt am Ende des Lagersegments. Die Zirkulation des Schmiermittels ist also bei diesem Prinzip unabhängig von irgendwelchen Pumpeinrichtungen und erfüllt somit die eingangs gestellte Forderung nach absoluter Ausfallsicherheit der Oelzufuhr urd Oelkühlung.

In der vorstehend geschilderten Form eignet sich das Prinzip jedoch nicht für Radialgleitlager mit horizontaler Lage der Welle. Dazu bedarf es vielmehr gewisser Modifikationen, die den Gegenstand der vorliegenden Erfindung bilden.

Darstellung der Erfindung

Das erfindungsgemässe hydrodynamische Radialgleitlager zeichnet sich aus durch die kennzeichnenden Merkmale des Patentanspruchs 1.

Bei einer vorteilhaften Ausführungsform eines solchen Radialgleitlagers sind Stützglieder für den Pumpblock vorgesehen, die diesen durch hydraulische, vom Schmieröldruck beaufschlagte Kraftverstärker mit einer zum Schmieröldruck proportionalen Kraft gegen die Welle drücken.

Kurze Beschreibung der Zeichnungen

Die Erfindung wird im folgenden unter Bezugnahme auf ein in den Zeichnungen dargestelltes Ausführungsbeispiel näher erläutert. Es zeigen:

Fig. 1 einen Längsschnitt durch ein mit zwei Axialdrucklagern kombiniertes Radialgleitlager als Generatorlager einer Rohrturbine,

Fig. 2 einen Querschnitt durch dasselbe gemäss dem in Fig. 1 eingezeichneten Schnittverlauf, die

Fig. 3 und 4 ein Gleitlagersegment im Grundriss bzw. in einem Querschnitt entlang des Schnittverlaufes IV-IV von Fig. 3, und die

Fig. 5 eine Anpressvorrichtung für den Pumpblock des Lagers.

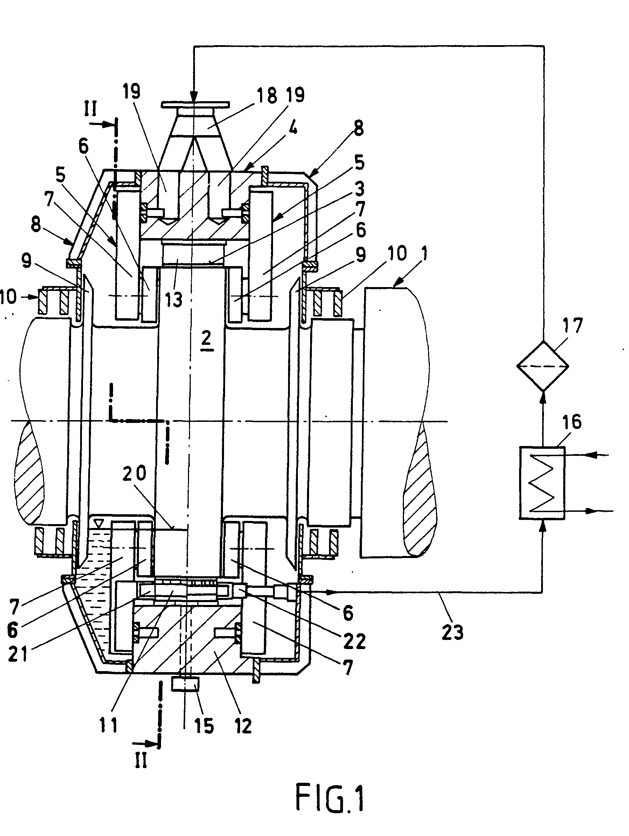

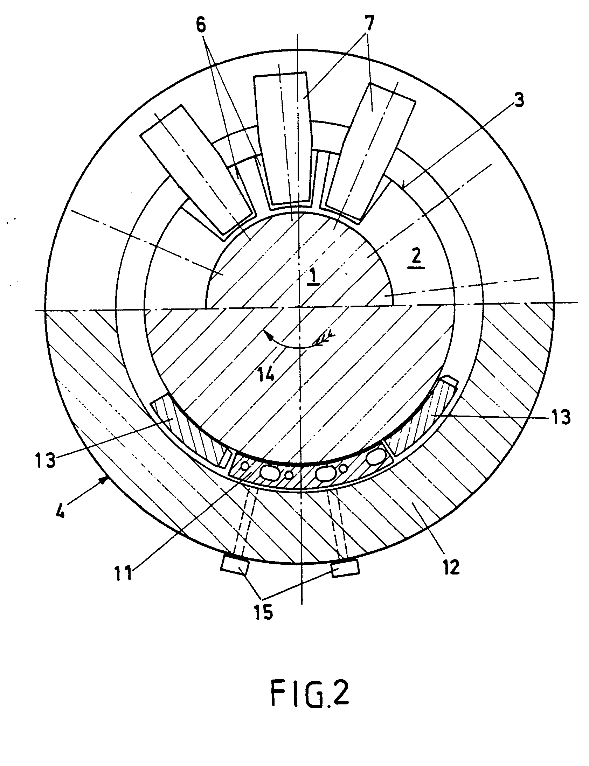

Die aus den Fig. 1 und 2 ersichtliche Generatorwelle 1 weist einen Wellenbund 2 auf, dessen kreiszylindrischer Umfang eine Wellengleitfläche 3 bildet und von einem Radialgleitlager 4 aufgenommen wird und dessen kreisförmige Seitenflächen als Gleitflächen für zwei Axialgleitlager 5 dienen, die eine Anzahl gleichmässig über den Umfang verteilter Axiallagersegmente 6 aufweisen, die sich in bekannter Weise kippbar auf Axialsegmentabstützbalken 7 abstützen und die Welle 1 in ihrer Längsrichtung fixieren. Das Radialgleitlager 4 und die zwei Axialgleitlager 5 sind von zwei Lagergehäusehälften umschlossen und die Welle 1 ist an ihren Durchtritten aus den Lagergehäusehälften mit Schleuderscheiben 9 versehen, die im Zusammenwirken mit Labyrinthen 10 das Austreten von Schmieröl aus dem Lagergehäuse verhindern.

Abweichend von dem in der erwähnten CH-Patentschrift 651 362 offenbarten selbstpumpenden hydrodynamischen Axiallager, bei dem sich die Elemente zur Erzeugung der Pumpwirkung und des Schmierfilms in den Lagersegmenten in diesen selbst befinden, sind beim vorliegenden Gleitlager die Funktionen Lagerung und Pumpen des Schmieröls getrennt.

Für letzteres dient ein eigener Pumpblock 11, der an der tiefsten Stelle eines Lagertragringes 12 sitzt und zu dessen beiden Seiten je ein Lagersegment 13 vorgesehen ist. Diese sind, was in Fig. 2 nicht im Detail dargestellt ist, in bekannter Weise kippbar im Lagertragring 12 gelagert, so dass sich bei drehender Welle, deren Drehrichtung in Fig. 2 durch den Drehrichtungspfeil angedeutet ist, durch das von der Welle 1 aus dem Oelsumpf mitgenommenen Schmieröl ein tragfähiger, hydrodynamisch gebildeter Schmierfilmkeil zwischen den Gleit flächen der Welle und der Lagersegmente aufbaut.

In Fig. 2 sind zwei Lagersegmente 13 gezeigt, die für eine statisch bestimmte Stützung der Welle ausreichen. Zur Sicherung gegen ein Abheben kann aber auch, wie in Fig. 1 gezeigt, an der höchsten Stelle der Welle ein weiteres Lagersegment 13 vorgesehen sein.

Anpressvorrichtungen 15, deren Aufbau unten noch näher beschrieben wird, drücken den Pumpblock 11 an die Welle 1. Die Pumpwirkung des Pumpblocks ist so stark, dass das Oel über einen Schmierölkühler 16, einen Schmierölfilter 17 und eine Rohrverzweigung 18 in den Lagertragring 12 gedrück wird, wo es durch Verteilkanäle 19 in die Axialsegmentabstützbalken 7 und durch weitere, nicht dargestellte Kanäle zu den einzelnen Radiallagersegmenten gelangt. Die Segmente weisen Bohrungen auf, durch die das Oel in die Oelversorgungstaschen vor den Schmierspalten strömt.

Der Pumpblock 11, der im Oelsumpf mit dem Niveau 20 liegt, saugt das Oel über einen Ansaugschnorchel 21 aus dem Gehäuseboden an, damit nur beruhigtes, luftfreies Oel in den Kreislauf gelangt. Das aus dem Pumpblock in den Kreislauf geförderte Oel wird in einem Sammelkanal 22 zusammengefasst, von wo es über die Schmierölleitung 23 zum Kühler 16 strömt.

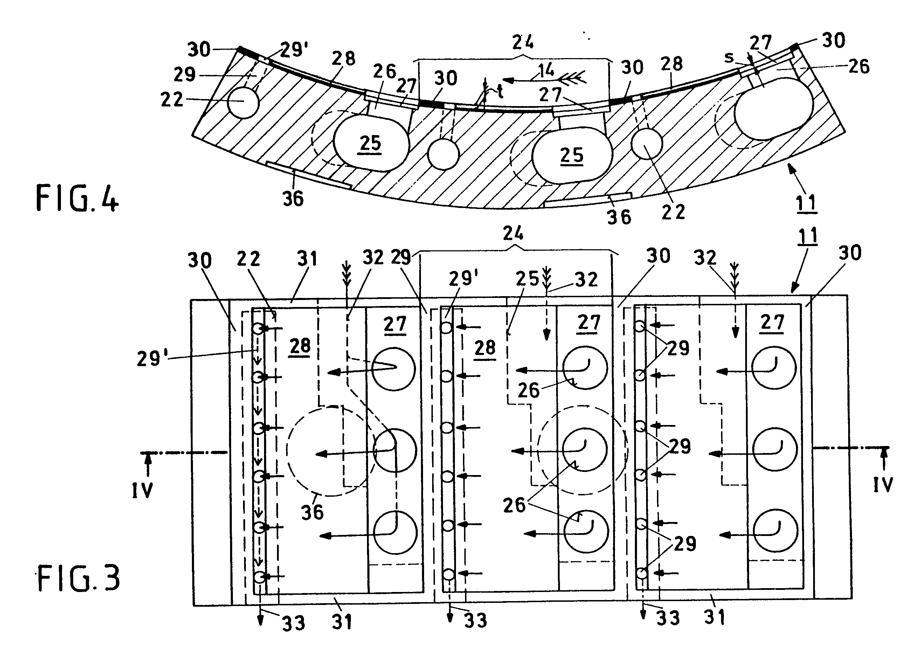

Der Pumpblock 11 ist in Fig. 3 im Grundriss und in Fig. 4 im Schnitt gemäss dem in Fig. 3 eingezeichneten Schnittverlauf IV-IV dargestellt.

Der Pumpblock weist drei Pumpsegmente 24 auf, deren jedes einen Pumpspaltversorgungskanal 25, ferner je drei Ansaugkanäle 26, einen sich über diese drei Ansaugkanäle 26 erstreckenden Verteilkanal 27 von der Tiefe s, eine Pumptasche 28 von der radialen Tiefe t und eine Sammelrinne 29' mit einer Reihe von Abflusskanälen 29, die in den erwähnten Sammelkanal 22 einmünden, aus dem das Oel über die Schmierölleitung 23, siehe Fig. 1, in den Kreislauf gedrückt wird. Die Pumptaschen 28 sind von Querstegen 30 und Seitenstegen 31 begrenzt, die ein Entweichen des Schmierstoffes aus den Pumptaschen 28 weitgehend vermeiden. Der Pumpspaltversorgungskanal 25 ist nur einseitig an der durch den Strömungspfeil 32 gekennzeichneten Seite offen, nach dem, in der Einströmrichtung des Oeles gesehen, dritten Ansaugkanal 26 ist der Kanal 25 geschlossen, dessen Querschnitt sich im übrigen in der Einströmrichtung des Oels zwecks ungefährer Einhaltung der Kontinuitätsbedingung für die Strömung nach dem ersten und zweiten Ansaugkanal 26 jeweils sprungartig verjüngt, was in Fig. 3 durch die treppenartig verlaufende, strichlierte Linie dargestellt ist.

Das auf der Einströmseite eines Pumpsegments des Pumpblocks 11 über den obenerwähnten Schnorchel 21 aus dem Oelsumpf in den Pumpspaltversorgungskanal 25 einströmende Oel wird durch die Ansaugkanäle 26 und den Verteilkanal 27 in die Pumptasche 28 hochgesaugt und von der Wellenlauffläche über die Länge der Pumptasche 28 mitgenommen. Infolge der Verengung des Spalts zwischen der Welle 1 und dem Quersteg 30 wird nur ein kleiner Teil des Oels von der Welle weiter mitgerissen, während der grössere Teil durch den Stau über die Sammelrinne 29' in die Abflusskanäle 29 und von dort, wie durch die Strömungspfeile 33 in Fig. 3 angedeutet, über den erwähnten Sammelkanal 22 in den Schmierölkreislauf gedrückt wird.

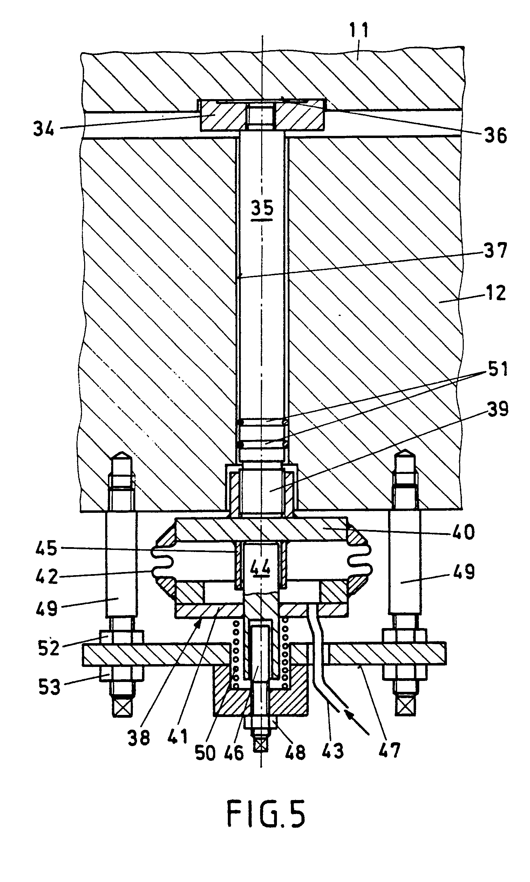

Die Fig. 5 zeigt den Aufbau einer Anpressvorrichtung 15 für den Pumpblock in einer Schnittdarstellung. Ueber Stützteller 34 stützt sich der Pumpblock 11 auf eine Stützstange 35 ab. Bei dem in den Fig. 3 und 4 dargestellten Pumpblock sind zwei Stützstellen vorhanden, an denen die Stützteller 34 in Ansenkungen 36 eingreifen. Die Stützstange 35 erstreckt sich durch eine Bohrung 37 hindurch nach unten in einen hydraulischen Kraftverstärker 38, in dessen Oberteil sie mit einem Gewinde 39 verschraubt ist. Der Kraftverstärker weist eine obere Platte 40 und eine untere platte 41 auf, die durch ein Wellrohr 42 flexibel miteinander verbunden sind und so eine geschlossene Kammer bilden, die über eine Oeldruckleitung 43 mit dem Schmierölkreislauf in leitender Verbindung steht.

Ein mit der unteren Platte 41 verbundener Zapfen 44 greift mit seinem oberen Ende in eine mit der oberen Platte 40 verbundene Hülse 45 ein und zentriert damit die beiden Platten 40 und 41 gegeneinander. Das untere Ende des Zapfens 44 weist eine Längsbohrung auf, in die ein Zentrierzapfen 46 eingreift, der die untere Platte 41 führt und gleichzeitig als Anschlag für dieselbe dient. Er ist in einer Stützplatte 47 verschraubt und mittels einer Mutter 48 gesichert. Die Stützplatte 47 ist durch Stehbolzen 49 am Tragring 12 befestigt und nimmt in ihrer Mitte eine Schraubenfeder 50 auf, die zwischen der Stützplatte 47 und der unteren Platte 41 eingespannt ist. Durch zwei Muttern 52, 53 auf den Stehbolzen 49 lässt sich die Lage und Entfernung der Stützplatte 47 gegenüber dem Lagertragring 12 und damit auch die Vorspannung der Feder 50 einstellen. Zwei Rundschnurringe 51 auf der Stützstange 35 dichten den Oelsumpf gegen aussen ab.

Im Betrieb presst der Pumpdruck des Oelkreislaufes, der über die Leitung 43 im Kraftverstärker 38 zur Wirkung kommt, den Pumpblock 11 mit einer zum Pumpdruck proportionalen Kraft gegen die Welle 1.

Im Stillstand sorgt die Feder 50 dafür, dass der Pumpblock 11 an der Welle 1 gehalten wird, indem sie das obere Ende des Zapfens 44 zur Anlage an die obere Platte 40 bringt und dadurch auch die Stützstange 35 hebt.

**Patentansprüche**

1. Selbstpumpendes hydrodynamisches Radialgleitlager (4) für eine Welle (1), mit einer durch die hydrodynamische Wirkung von in Spalten zwischen der Wellengleitfläche (3) und dazu parallelen Flächen mindestens eines Pumpsegments (24) induzierten Förderung eines Schmieröles aus einem Oelsumpf, wobei der kleinere Teil des so geförderten Schmieröles zur bildung eines Schmierölkreises dient und der restliche, grössere Teil des Schmieröls unter Druck in einen Schmierölkreislauf (23, 16, 17) gepumpt oder direkt in den Oelsumpf zurückgefördert wird, wobei ferner die genannten Pumpsegmente (24) in bekannter Weise je eine Pumptasche (28), einen Pumpspaltversorgungskanal (25), durch den das Schmieröl in die Pumptasche (28) gesaugt wird, sowie je einen Sammelkanal (22), durch den das Schmieröl aus der Pumptasche (28) abfliesst, aufweisen, gekennzeichnet durch mindestens zwei, zur Vertikalen durch die Wellenachse symmetrisch in einem Lagertragring (12) angeordneten Radialgleit-lagersemente (13), welche die Gleitlagerflächen für die Stützung der Welle (1) aufweisen, sowie dadurch, dass das Pumpsegment bzw. die Pumpsegmente (24) in einem Pumpblock (11) vorgesehen ist bzw. sind, der an der Unterseite der Welle (1) zwischen den beidseitig der Vertikalen durch die Wellenachse angeordneten Radialgleitlagersegmenten (13) auf elastisch nachgiebigen Stützgliedern (34 bis 51) gelagert ist.

2. Radialgleitlager nach Anspruch 1, dadurch gekennseichnet, dass der Pumpblock (11) die Form eines Kreisringsektors aufweist und mit drei Pumpsegmenten versehen ist, deren Pumptaschen (28) an ihrem Anfang, in Drehrichtung (14) der Welle (1) gesehen, mit einem Verteilkanal (27) und an ihrem Ende mit einer Sammelrinne (29') in Verbindung stehen, dass diese sich parallel zur Welle (1) erstrecken und die Pumpsegmente (24) durch zur Welle (1) parallele Querstege (30) und durch Seitenstege (31) an den gekrümmten Rändern des Pumpblocks (11) gegen die benachbarten Pumpsegmente bzw. gegen den Oelsumpf abgegrenzt sind, dass die Tiefe (s) der Verteilkanäle (27) und der Sammelrinnen (29') grösser ist als die Tiefe (t) der Pumptaschen (28), dass die Pumpspaltversorgungskanäle (25) über Ansaugschnorchel (21) mit dem Oelsumpf in Verbindung stehen, dass die Pumpspaltversorgungskanäle (25) in ihrer Durchflussrichtung abgestufte Querschnitte aufweisen und jeder dieser Querschnitte über einen Ansaugkanal (26) mit den Verteilkanälen (27) in Verbindung steht, und dass die Sammelrinnen (29') über Abflusskanäle (29) mit den Sammelkanälen (22) verbunden sind.

3. Radialgleitlager nach Anspruch 1, dadurch gekennzeichnet, dass für die Lagerung des Pumpblocks (11) zwei in Umfangsrichtung gegeneinander versetzte Stützglieder vorgesehen sind, die jeweils folgende Teile aufweisen:

Eine Stützstange (35), die sich von ausserhalb des Lagertragrings (12) durch eine radiale Bohrung (37) in demselben bis zur äusseren Zylinderfläche des Pumpblocks (11) erstreckt und über einen dazwischenliegenden Stützteller (34) in eine kreisrunde Ansenkung (36) am Pumpblock (11) eingreift;

einen hydraulischen Kraftverstärker (38) mit einer oberen Platte (40) und einer unteren Platte (41), deren Umfänge durch ein Wellrohr (42) miteinander verbunden sind und mit diesem eine geschlossene Kammer begrenzen;

eine Oeldruckleitung (43), die den Schmierölkreislauf (23, 16, 17) mit der von den beiden Platten (40, 41) und dem Wellrohr (42) umschlossenen Kammer verbindet;

eine an der Aussenseite der oberen Platte (40) starr befestigte Gewindehülse, in welche die Stützstange 35 mit einem Gewinde verschraubt ist;

eine mit der Innenseite der oberen Platte (40) starr verbundene Hülse (45);

einen Zapfen (44), der die untere Platte (41) mittig durchdringt und mit ihr starr verbunden ist, wobei die Hülse (45) eine Führung für den Teil des Zapfens (44) bildet, der in das Innere der von den Platten (40, 41) und dem Wellrohr (42) umschlossenen Kammer hineinragt, wogegen der nach aussen ragende Teil des Zapfens (44) eine Längsbohrung aufweist;

eine Stützplatte (47), die an zwei in den Lagertragring (12) eingeschraubten Stehbolzen (49) durch je zwei Muttern (52, 53) befestigt ist, die eine Einstellung der Lage der Stützplatte (47) gegenüber dem Lagertragring 12 gestatten, welche Stützplatte (47) eine mittige Vertiefung für die Aufnahme einer Schraubenfeder (50) aufweist, die zwischen dem Grund dieser mittigen Vertiefung und der. Aussenseite der unteren Platte (41) eingespannt ist, sowie eine mittige Gewindebohrung zur Aufnahme eines Zentrierzapfens (46), der in die erwähnte Längsbohrung des Zapfens (44) eingreift und durch eine Mutter (48) gegenüber der Stützplatte (47) verspannt ist; und

Rundschnurringe (51) auf der Stützstange (35) zum Abdichten der Bohrung (37) im Lagertragring (12).

## Revendications

1. Palier radial hydrodynamique à autopom-page (4) pour un arbre (1), avec une circulation d'huile de lubrification à partir d'une réserve d'huile, induite par l'effet hydrodynamique d'au moins un segment de pompage (24), dans des interstices entre la surface lisse (3) de l'arbre et des faces parallèles à celleci, dans lequel une petite partie de l'huile de lubrification ainsi mise en circulation sert à constituer un arc d'huile de lubrification et où le reste, c.à.d. la plus grande partie, de l'huile de lubrification est, sous pression, refoulé dans un circuit d'huile de lubrification (23, 16, 17) ou renvoyé directement dans la réserve d'huile, et où en plus les segments de pompage (24) précités comportent chacun, de manière connue, une poche de pompage (28), un canal 25) d'alimentation de l'interstice de pompage, à travers lequel l'huile de lubrification est aspirée, dans la poche de pompage (28), ainsi qu'un canal collecteur (22), à travers lequel l'huile de lubrification s'écoule hors de la poche de pompage (28), caractérisé par au moins deux segments (13) de palier lisse radial disposés dans une bague de support de palier (12) symétriquement par rapport à la verticale passant par l'axe de l'arbre, qui présentent les surfaces de glissement destinées à supporter l'arbre (1), ainsi qu'en ce que le ou les segment(s) de pompage (24) est (sont) monté(s) dans un bloc pompe (11) qui est supporté sur des organes d'appui élastiquement déformables, sur le côté inférieur de l'arbre (1), entre les segments (13) de palier lisse radial disposés de part et d'autre de la verticale passant par l'axe de l'arbre.

2. Palier radial suivant la revendication 1, caractérisé en ce que le bloc pompe (11) présente la forme d'un secteur d'anneau circulaire et est pourvu de trois segments de pompage, dont les poches de pompage (28) sont en communication à leur début avec un canal de distribution (27) et à leur fin avec une rigole collectrice (29'), en regardant dans le sens de rotation de l'arbre (1), en ce que celles-ci sont parallèles à l'arbre et en ce que les segments de pompage (24) sont délimités, par rapport aux segments de pompage voisins, respectivement par rapport à la réserve d'huile, par des nervures transversales (30) parallèles à l'arbre (1) et par des rebords latéraux (31) aux bords courbes du bloc pompe (11), en ce que la profondeur (s) des canaux de distribution (27) et des rigoles collectrices (29') est plus grande que la profondeur (t) des poches de pompage (28), en ce que les canaux (25) d'alimentation de l'interstice de pompage communiquent avec la réserve d'huile par un schnorchel d'aspiration (21), en ce que les canaux (25) d'alimentation de l'interstice de pompage présentent des sections en gradins dans le sens de l'écoulement, en ce que chacune de ces sections communique avec les canaux de distribution (27) par un canal d'aspiration (26) et en ce que les rigoles collectrices (29') sont reliées aux canaux collecteurs (22) par des canaux d'évacuation (29).

3. Palier radial suivant la revendication 1, caractérisé en ce que, pour l'appui du bloc pompe (11), il est prévu deux organes d'appui décalés angulairement l'un par rapport à l'autre, qui comprennent chacun les pièces suivantes:

une tige d'appui (35), qui s'étend depuis l'extérieur de la bague (12) de support de palier, à travers un alésage radial (37) dans celle-ci, jusqu'à la surface cylindrique intérieure du bloc pompe (11) et s'engage par un plateau d'appui intermédiaire (34) dans un défoncement circulaire (36) dans le bloc pompe (11);

un amplificateur de force hydraulique (38) avec une plaque supérieure (40) et une plaque inférieure (41), dont les contours sont reliés l'un à l'autre par un tube ondulé souple (42) et qui délimitent avec celui-ci une chambre fermée;

une canalisation d'huile sous pression (43), qui relie le circuit d'huile de lubrification (23, 16, 17) à la chambre définie par le tube ondulé (42) et les deux plaques (40, 41);

une douille filetée fixée à la face extérieure de la plaque supérieure (40), dans laquelle est vissée la tige d'appui (35) au moyen d'une portée filetée;

une douille (45) fixée à la face intérieure de la plaque supérieure (40);

5

un tourillon (44), qui traverse la plaque inférieure (41) en son centre et est fixé à celle-ci, la douille (45) assurant un guidage pour la partie du tourillon (44) qui pénètre à l'intérieur de la chambre définie par les plaques (40, 41) et le tube ondulé (42), tandis que la partie du tourillon (44) saillant vers l'extérieur présente un alésage longitudinal;

une plaque d'appui (47), qui est fixée à deux goujons filetés (49) vissés dans la bague (12) de support de palier, au moyen de deux écrous (52, 53) qui permettent le réglage de la position de la plaque d'appui (47) par rapport à la bague (12) de support de palier, laquelle plaque d'appui (47) présente un défoncement central destiné à recevoir un ressort hélicoïdal (50), qui est serré entre le fond de ce défoncement central et la face extérieure de la plaque inférieure (41), ainsi qu'un alésage central fileté destiné à recevoir un tourillon de centrage (46), qui s'engage dans l'alésage longitudinal précité du tourillon (44) et qui est serré par rapport à la plaque d'appui (47) au moyen d'un écrou (48); et

des joints toriques (51) posés sur la tige d'appui (35) pour assurer l'étanchéité de l'alésage (37) dans la bague (12) de support de palier.

## Claims

1. A self-pumping hydrodynamic radial sliding bearing (4) for a shaft (1), having a transport or a lubricating oil from an oil sump induced by the hydrodynamic effect of [sic] in gaps between the shaft sliding surface (3) and surfaces, parallel thereto, of at least one pump segment (24), a minor part of the lubricating oil thus transported serving to form a lubricating oil ring and the remaining major part of the lubricating oil being pumped under pressure into a lubricating oil circuit (23, 16, 17) or transported back directly into the oil sump, whilst the said pump segments (24) each exhibit in known manner one pump pocket (28), one pump gap supply duct (25) through which the lubricating oil is drawn into the pump pocket (28), and one collecting duct (22), through which the lubricating oil is discharged from the pump pocket (28), characterized by at least two radial sliding bearing segments (13) which are arranged in a bearing support ring (12) symmetrically to the vertical through the shaft axis and exhibit the sliding bearing surfaces for bracing the shaft (1), and in that the pump segment or pump segments (24) is or are provided in a pump block (11) which is mounted on resiliently yielding bracing elements (34 to 51) on the underside of the shaft (1) between two radial sliding bearing segments (13) arranged on either side of the vertical through the shaft axis.

2. The radial sliding bearing according to Claim 1, characterized in that the pump block (11) exhibits the form of an annular sector of a circle and is provided with three pump segments, the pump pockets (28) of which communicate at their start, as viewed in the direction of rotation (14) of the shaft (1), with a distributor duct (27) and at their end with a collecting channel (29'), in that the same extend parallel to the shaft (1) and the pump segments (24) are delimited with respect to the adjacent pump segments and to the oil sump respectively by transverse webs (30) parallel to the shaft (1) and by lateral webs (31) at the rounded edges of the pump block (11), in that the depth (s) of the distributor ducts (27) and of the collecting channels (29') exceeds the depth (t) of the pump pockets (28), in that the pump gap supply ducts (25) communicate through intake breathers (21) with the oil sump, in that the pump gap supply ducts (25) exhibit stepped cross-sections in their flow direction and each of these cross-sections communicates through an intake duct (26) with the distributor ducts (27), and in that the collecting channels (29') are connected by discharge ducts (29) to the collecting ducts (22).

3. The radial sliding bearing according to Claim 1, characterized in that two bracing elements mutually offset in its circumferential direction are provided for the mounting of the pump block (11) and exhibit in each case the following parts:

A bracing rod (35), which extends from outside the bearing support ring (12) through a radial bore (37) in the latter to the outer cylindrical surface of the pump block (11) and engages through an interposed bracing plate (34) into a circular countersink (36) on the pump block (11);

a hydraulic power amplifier (38) with an upper plate (40) and a lower plate (41), the circumferences of which are mutually connected by a corrugated tube (42) and delimit a closed chamber therewith;

an oil pressure pipe (43), which connects the lubricating oil circuit (23, 16, 17) to the chamber enclosed by the two plates (40, 41) and the corrugated tube (42);

a screwthreaded sleeve attached rigidly to the outside of the upper plate (40), into which the bracing rod 35 is screwed by a screwthread;

a sleeve (45) connected rigidly to the inside of the upper plate (40);

a pin (44), which penetrates the lower plate (41) centrally and is rigidly connected thereto, whilst the sleeve (45) forms a guide means for that part of the pin (44) which projects into the interior of the chamber enclosed by the plates (40, 41) and the corrugated tube (42), whereas the outwardly projecting part of the pin (44) exhibits a longitudinal bore;

a bracing plate (47), which is attached by two nuts (52, 53) for each to two stay bolts (49) screwed into the bearing support ring (12), which permit an adjustment of the position to the bracing plate (47) relative to the bearing support ring 12, which bracing plate (47) exhibits a central depression for the accommodation of a helicoidal spring (50) which is clamped between the bottom of this central depression and the outside of the lower plate (41), and a central screwthreaded bore to accommodate a centering pin (46) which

engages into the said longitudinal bore of the pin (44) and is tensioned relative to the bracing plate (47) by a nut (48); and loop-rings (51) on the bracing rod (35) to seal the bore (37) in the bearing support ring (12).

FIG.1

FIG.2

FIG.4

FIG.3

FIG.5

4